# EUROPEAN PATENT APPLICATION

(11) **EP 3 669 660 A1**
(43) Date of publication of application: **24.06.2020**
(21) Application number: 18215224.9
(22) Date of filing: 21.12.2018
(51) Int. Cl.: A23F 5/04, A23N 12/08, A23N 12/12

(54) **SYSTEM FOR ROASTING COFFEE BEANS**

(71) Applicant: Société des Produits Nestlé S.A., 1800 Vevey (CH)
(72) Inventor: DUBIEF, Flavien, 1424 CHAMPAGNE (CH); CECCAROLI, Stefano, 1373 Chavornay (CH); BIGLER, Nicolas, 1054 Morrens (CH); JACCARD, Sandrine, 1450 Ste-Croix (CH); PINDJUROV, Riste, 1740 Neyruz (CH)
(74) Representative: Ducreux, Marie

(57) **Abstract**

The invention concerns a system (10) for roasting coffee beans comprising :
- a roasting apparatus (1), said apparatus comprising :
• a vessel (11) to contain coffee beans,
• a heater (12) to heat coffee beans contained in the vessel (11)
• a control system (180) operable to control the heater (12) and configured to apply a roasting recipe comprising at least a temperature versus time profile,
and

- an apparatus (2) for measuring a quantity of coffee beans introduced inside the vessel (11), and wherein the control system (180) of the roasting apparatus (1) is operable to obtain :
- the quantity of coffee beans introduced inside the vessel (11) and measured by the measuring apparatus (2), and
- the identification of the nature of the coffee beans introduced inside the vessel (11), and
wherein the control system (180) of the roasting apparatus (1) is operable to determine the roasting recipe to be applied to the coffee beans at least partly based on the identification of the nature of said coffee beans and on the measured quantity of said coffee beans introduced inside the vessel (11).

## Description

### Field of the invention

The present invention relates to the roasting coffee beans, and more specifically to the roasting of relatively small quantities of coffee beans, particularly suited for use in the home or in shops and cafes.

### Background of the invention

For the last decades, numerous roasters have been developed for use in the home or in small shops and coffees.
Roasters can be based on fluidized bed technology implementing a hot air fluid bed chamber. Within such a chamber, heated air is forced through a screen or a perforated plate under the coffee beans with sufficient force to lift the beans. Heat is transferred to the beans as they tumble and circulate within this fluidized bed. Alternatively, other roasters are based on rotating drums or agitated chambers. Whatever the heating technology, most of these roasters implement automatic roasting processes with roasting profiles stored in the control unit of the apparatus.
Whereas the roasting chamber of home devices is usually sized to hold a small quantity of coffee beans that is systematically filled at each roasting operation, devices for small shops and coffees are usually sized at an upper scale enabling the operator to roast beans for a large or a small number of consumers alternatively. For example, the roasting chamber can be sized to enable the roasting of a quantity of coffee beans ranging from 50 g to 300 g. The roasting parameters - essentially time and temperature - cannot be the same for different quantities of beans to be roasted. Otherwise, when the quantity of beans diverts significantly from the standard usual quantity, the quality of the roasting can be adversely affected : beans can become burnt or the desired degree may not be reached or the beans may not be uniformly roasted.

### Summary of the invention

An object of the present invention is to improve the automatic roasting of coffee beans.

It would be advantageous to provide a roasting apparatus enabling optimal roasting whatever the quantity of beans to roast.

It would be advantageous to provide a roasting apparatus applying automatically the roasting profile corresponding to the quantity of beans introduced in the apparatus.

Objects of the invention are achieved by the apparatus for roasting coffee beans according to Claim 1, the measuring apparatus according to Claim 9, the method of Claim 10 and the computer program according to Claim 11.

In a first aspect of the invention, there is provided a system for roasting coffee beans comprising :
- a roasting apparatus, said apparatus comprising :
   - a vessel to contain coffee beans,
   - a heater to heat coffee beans contained in the vessel,
   - a control system operable to control the heater and configured to apply a roasting recipe comprising at least a temperature versus time profile,
      and
- an apparatus for measuring a quantity of coffee beans to be introduced inside the vessel, and wherein the control system of the roasting apparatus is operable to obtain :
- the quantity of coffee beans introduced inside the vessel and measured by the measuring apparatus, and
- the identification of the nature of the coffee beans introduced inside the vessel, and
wherein the control system of the roasting apparatus is operable to determine the roasting recipe to be applied to the coffee beans at least partly based on the identification of the nature of said coffee beans and on the measured quantity of said coffee beans introduced inside the vessel.

The roasting apparatus comprises a vessel to contain coffee beans during the roasting process. In the vessel coffee beans are heated and preferably mixed to homogenise heating through the beans.
Mixing can be obtained with a fluidic bed of hot air or mechanically with stirring blades or through rotation of a rotating drum.
Preferably the vessel is hot air fluid bed chamber. Within such a vessel, heated air is forced through a screen or a perforated plate under the coffee beans with sufficient force to lift the beans. Heat is transferred to the beans as they tumble and circulate within this fluidized bed. Alternatively the vessel can be a drum chamber wherein the coffee beans are tumbled in a heated environment. The drum chamber can consist of a horizontal rotating drum or the drum chamber can comprise stirring blades to tumble the coffee beans in a heated environment.

The roasting apparatus comprises a heater to heat coffee beans contained in the vessel when the vessel is positioned at the roasting position inside the roasting apparatus,
As a source of heating, preferably the apparatus comprises an electrical heater. This electrical heater is usually an electrical resistance.
An electrically powered heater presents the advantage that the air pollutants produced during the roasting are pollutants generated from the heating of coffee beans themselves and not from the burning of gases as it happens when the source of heating is a gas burner using natural gas, propane, liquefied petroleum gas (LPG) or even wood.

The apparatus comprises a control system operable to control the heater and configured to apply a roasting recipe comprising at least a temperature versus time profile inside the vessel.
Usually, this control is implemented based on the measure of at least one temperature sensor positioned in the vessel in feedback loop control.

The system comprises an apparatus for measuring the quantity of coffee beans to be introduced inside the vessel by the user. This measuring apparatus is configured to receive the beans and to measure the quantity of coffee beans that is introduced inside the vessel in order to be roasted.
This measuring apparatus is configured to communicate said measured quantity of beans introduced in the vessel in order to be roasted as an input to the control system of the roasting apparatus.

In addition, the control system of the roasting apparatus is configured to obtain identification of the nature of the coffee beans introduced inside the vessel. The identification of beans relates to the nature of the beans which has the direct impact on the process of roasting the beans. Generally, the nature relates to the origin of the beans (Arabica, Robusta, ...).

In addition, the control system of the roasting apparatus is operable to determine the roasting recipe at least partly based on the identified nature of the coffee beans and the input of the measured quantity of coffee beans introduced inside the vessel.

Advantageously objects of the invention are solved since the above measured quantity and identification of coffee beans and their use as input by the control system enables to determine the roasting recipe to be applied to said precise quantity of specific beans introduced in the roasting apparatus.

The measuring apparatus can measure and provide the control system of the system with a quantity such as weight, volume or level of coffee beans present in the vessel.
Depending on the type of quantity measured, the measuring apparatus can be :
- a scale measuring weight of coffee beans, or
- a device comprising at least one cavity of predetermined volume, or
- a level sensor measuring a volume of coffee beans inside the vessel.

Preferably, this quantity is the weight and the measuring apparatus is a scale.

The device comprising at least one cavity of predetermined volume enables the user to select a cavity of predetermined volume and to fill this cavity completely with beans with the result that a precise volume of beans is measured. The control system of the roasting apparatus is provided with this precise volume of beans.
In one specific embodiment, the roasting apparatus can comprise a set of different vessels to contain different volumes of coffee beans, such as small, medium and large volume vessels. In that embodiment the control system can be configured to obtain the quantity of coffee beans inside the vessel by recognising which vessel (small, medium, large) is positioned inside the roasting apparatus.

The measuring device can be a level sensor measuring a volume of coffee beans inside the vessel. The vessel can be removed from the roasting apparatus during the filling operation and once the vessel is positioned back inside the roasting apparatus, the level sensor can measure the level of beans. The process control is configured to deduce the volume of beans from said measured level.

According to one first embodiment, the measuring apparatus can be a sub-part of the roasting apparatus. In that embodiment, the roasting apparatus and the measuring apparatus are hold by the same frame or housed in the same housing forming one single apparatus. The measuring apparatus and the roasting apparatus are part of the same apparatus.

According to one second embodiment, the measuring apparatus can be an apparatus physically separated from the roasting apparatus and the system comprises communication means configured to communicate the measured quantity of coffee beans from the measuring apparatus to the control system of the roasting apparatus.
In that second embodiment, the measuring apparatus can be placed randomly at any position around the roasting apparatus.

Communication means can enable communication through Wi-Fi, Bluetooth, a cable (USB, Serial), optical communication, GSM communication.

With these two embodiments, the measuring apparatus can be configured to measure the quantity of beans introduced inside an intermediate container, before this measured quantity of beans is introduced inside the vessel of the roasting apparatus.

Preferably, the vessel is hold inside the roasting apparatus in a roasting position and the vessel is removable from the roasting apparatus.
The vessel of the roasting apparatus can be removable from the roasting apparatus in order to introduce coffee beans therein. Consequently, the vessel can be positioned in at least two different positions :
- one roasting position, where the vessel is hold inside the roasting apparatus and roasting can be operated, and
- another filling position, where the vessel is removed from the roasting apparatus and coffee beans can be introduced inside the vessel. This filling position corresponds to any position of the vessel outside the roasting apparatus.
Usually, the vessel presents a top opening. This top opening enables the introduction of coffee beans when the vessel is removed from the roasting apparatus. This top opening enables the evacuation of smoke produced inside the vessel during the roasting of coffee beans too.
Preferably, the vessel comprises a handle to facilitate its removal from the apparatus and to introduce it back again in the roasting position.
Usually, the vessel comprises a perforated bottom wall. This bottom wall holds the beans introduced in the vessel and enables the introduction of a flow of hot air inside the vessel during the roasting of coffee beans.

The measuring apparatus can be configured to receive and hold the removable vessel in a measuring position, said measuring position being apart the roasting position.
Accordingly, the vessel can be positioned in different positions where different steps are implemented :
- the vessel can be positioned in the roasting position so that roasting operation can be implemented. In this roasting operation, the vessel is connected to the roasting apparatus so that the heater can supply hot air inside the vessel.
   or
- the vessel can be removed from the roasting position and placed in a measuring position wherein it is received and hold by the measuring apparatus. Beans can be introduced inside the vessel while the vessel is in this measuring position or while the vessel is in another position different from the roasting position. For example, beans can be introduced in the vessel while it is positioned aside the system on a table top.
Preferably, the measuring apparatus comprises a receiving area designed to cooperate with the bottom of the vessel. Accordingly the vessel can be received and hold in a secure manner during measuring operation, and optionally during filling operation.

According to one mode of the above first embodiment, the measuring apparatus can be configured to measure the quantity of beans introduced inside the vessel while the vessel is in the roasting position. Accordingly, in the same position of the vessel, the coffee beans present in the vessel can be measured and roasted.
In another position, the vessel can be removed from that roasting position so that beans can be filled inside the vessel or removed from the vessel after roasting.
According to this mode, the measuring apparatus can be a scale and, in the roasting position, the removable vessel can be suspended to the scale. Alternatively, in the roasting position, the removable vessel can lay on the scale.
According to this mode, the vessel can comprise a level sensor to measure the volume of beans inside the vessel.
Preferably, the vessel is at least partly transparent and presents visual upper and lower limit lines drawn respectively near to the top and bottom of the vessel. These lines help the user to keep the volume of beans inside an operable scope.

The identification of the beans can be obtained :
- by manual input from the user. This manual input can be entered through a user interface like a touchscreen, buttons and/or display. The user interface can be comprised either in the roasting apparatus or in the measuring apparatus. The input can be a selection in a list of natures of coffee beans displayed on the user interface. The input can be the entry of a digital code read from a coffee beans packaging.
- from an identification device configured to read automatically identification means from a beans package presented by the user, like a code reader. The identification device can be comprised in the measuring device or in the roasting device or alternatively in a mobile device.
In all cases, the beans are introduced inside the vessel by the user, which explains the problem that the quantity of beans in the vessel may vary.
In a specific embodiment, the measuring apparatus comprises an identification device configured to read identification means from a beans package and/or a user interface to input the identification of the nature of the coffee beans.

In one preferred embodiment, the system comprises a database, said database storing, for each nature of coffee beans, different roasting recipes adapted to the roasting of different pre-determined quantities of beans, and
based on the identification of the nature of the coffee beans and on the measured quantity of coffee beans, the control system of the roasting apparatus is configured to select the roasting recipe corresponding to the roasting of a pre-determined quantity of beans presenting the smallest difference of quantity with the measured quantity.
This selected roasting recipe corresponds to the determined roasting recipe to be applied to the coffee beans.
The different roasting recipes adapted to the roasting of different pre-determined quantities of beans of the database are usually defined by experimentation.

This database can be stored :
- in a memory of the roasting apparatus or of the measuring apparatus,
- in a server remotely connected to the roasting apparatus or to the measuring device.

In a second aspect, there is provided an apparatus for measuring a quantity of coffee beans hold in the vessel of roasting apparatus, said measuring apparatus being configured :
- to measure the quantity of coffee beans, and
- to communicate said quantity as an input to the control system of a roasting apparatus.
wherein said apparatus comprises a receiving area configured for holding the vessel of a roasting apparatus, said vessel being designed to contain coffee beans during a roasting operation.

In a third aspect, there is provided a method for roasting coffee beans using the system described above, the method comprising :
- measuring the quantity of the coffee beans introduced inside the vessel,
- identifying the nature of the coffee beans introduced inside the vessel,
- roasting the coffee beans inside the vessel by applying a roasting recipe, said roasting recipe being determined based on the measured quantity and the nature of the beans inside the vessel.

In a fourth aspect, there is provided a computer program of a processing unit of a control system of an apparatus for roasting coffee beans part of the system described above, the computer program comprising program code and/or program logic which when executed on the processing unit effects the steps of :
- measuring the quantity of the coffee beans introduced inside the vessel,
- identifying the nature of the coffee beans introduced inside the vessel,
- roasting the coffee beans inside the vessel by applying a roasting recipe, said roasting recipe being determined based on the measured quantity and the nature of the beans inside the vessel.

The above aspects of the invention may be combined in any suitable combination. Moreover, various features herein may be combined with one or more of the above aspects to provide combinations other than those specifically illustrated and described. Further objects and advantageous features of the invention will be apparent from the claims, from the detailed description, and annexed drawings.

### Brief description of the drawings

The characteristics and advantages of the invention will be better understood in relation to the following figures :
- Figures 1a to 1d schematically illustrate different embodiments of the system according to the present invention,
- Figure 2 is a schematic drawing of a general roasting apparatus 1 that can be used in one of the systems 10 illustrated in Figures 1 a to 1d,
- Figure 3 shows a block diagram of a control system 180 of the general roasting apparatus 1 according to Figure 3,
- Figure 4 illustrates roasting profile curves of coffee beans of nature N for different pre-determined weights,
- Figures 5 and 6 represent schematically method to use alternative systems according to the present invention.

### Detailed description of the drawings

### System

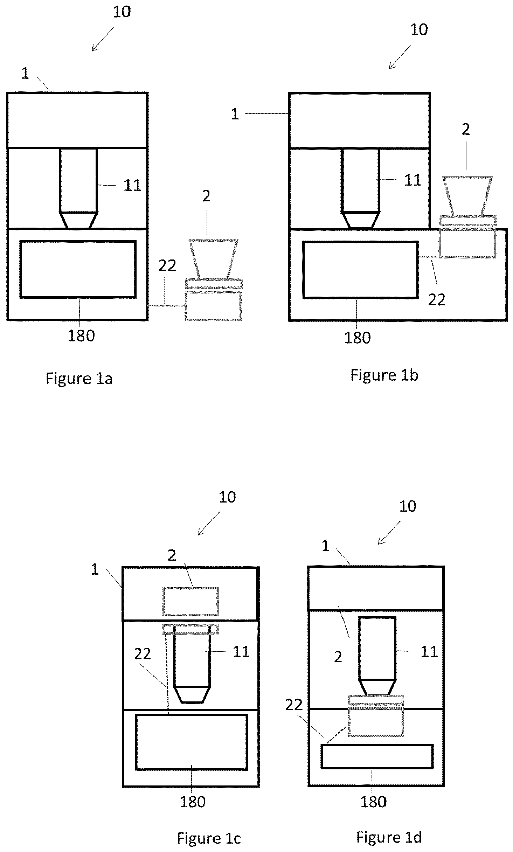

**Figure 1a** illustrates a system 10 of a roasting apparatus 1 and a measuring device 2, preferably a scale. The roasting apparatus comprises a vessel 11 configured for holding beans during the roasting operation. The measuring device 2 is configured to measure the quantity of coffee beans and to communicate the measured quantity input 22 through a communication interface to the control system 180 of the roasting apparatus.

**Figure 1b** illustrates an alternative system 10 of a roasting apparatus 1 and a measuring device 2, preferably a scale. The measuring device 2 is part of the roasting apparatus, precisely it is integrated in the same frame as the roasting apparatus, aside from the roasting apparatus. The measuring device 2 is configured to measure the quantity of coffee beans and to communicate the measured quantity input 22 to the control system 180 of the roasting apparatus.

**Figure 1c** illustrates an alternative system 10 of a roasting apparatus 1 and a measuring device 2. The measuring device 2 is part of the roasting apparatus. In one mode, the measuring device can be a scale, and, in its roasting position, the vessel 11 can be suspended to the scale. In that mode, the vessel is weighted before the vessel is completely locked in the roasting apparatus to apply roasting.
In another mode, the measuring device can be a level sensor, and, in its roasting position, the level of beans can be measured. The measuring device 2 is configured to communicate the measured quantity as an input 22 to the control system 180 of the roasting apparatus.

**Figure 1d** illustrates an alternative system 10 of a roasting apparatus 1 and a measuring device 2. The measuring device 2 is a scale that is part of the roasting apparatus. Precisely in its roasting position, the vessel 11 lays on the scale. The scale 2 is configured to weight coffee beans and to communicate the measured weight as an input 22 to the control system 180 of the roasting apparatus. Then the vessel is locked inside the roasting apparatus and roasting can be applied.

### Roasting Apparatus

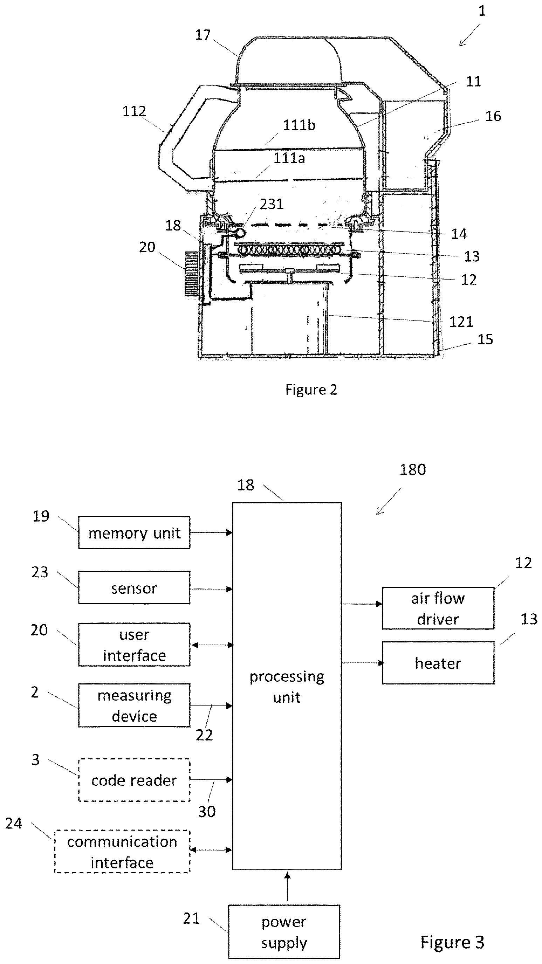

**Figure 2** shows an illustrative view part of a roasting apparatus 1 that can be used in one of the system 10 illustrated in Figures 1a to 1d. Functionally, the roasting apparatus 1 is operable to roast coffee beans hold in a vessel 11 by means of a flow of hot air introduced inside this vessel. At a first level, the apparatus comprises : a housing 15, a roasting unit 10 and a control system 180. These components will now be sequentially described.

### Housing of Roasting Apparatus

The housing 15 houses and supports the aforementioned components and comprises a base and a body. The base being for abutment with a support surface, preferably through feet that provide a gap between the base and the support surface. The body is for mounting thereto the components.

### Roasting Unit of Roasting Apparatus

The roasting unit 10 is operable to receive and roast coffee beans. This roasting unit is configured to roast beans in a fluidic bed of hot air. Yet in an alternative embodiment, the roasting unit can be configured to roast beans in a drum traversed by hot air and wherein beans are agitated.
The roasting unit 10 typically comprises at a second level of the roasting apparatus 1 : a vessel 11, an airflow driver 12, a heater 13, which are sequentially described.

The vessel 11 is configured to receive and hold the coffee beans introduced by the operator. A removable cover 17 enables the introduction and removal of beans. The bottom of the vessel is configured to enable air to pass through, specifically it can be a perforated plate 14 on which the beans can lie and through which air can flow upwardly.
A chaff collector 16 is in flow communication with the vessel 1 to receive chaffs that progressively separate from the beans and due to their light density are blown off to the chaff collector.
The vessel 11 comprises a handle 112 in order to enable the user to remove the vessel from the housing 15 to fill beans inside or remove the roasted beans.
In the illustrated embodiment the vessel 1 is at least partially transparent and comprises an upper level line 111b and a lower level line 111a designed on the vessel. Once the beans have been introduced inside the vessel 1, the user is able to check the quantity of beans introduced by reference to these levels111a, 111b. In particular, the operator is able to check if the quantity is inferior to the lower level, between the lower and upper levels or above the upper level.

The air flow driver 12 is operable to generate a flow of air in direction of the bottom of the vessel. The generated flow is configured to heat the beans and to agitate and lift the beans. As a result the beans are homogenously heated. Specifically, the airflow driver can be a fan powered by a motor 121. Air inlets can be provided inside the base of the housing in order to feed air inside the housing, the air flow driver blowing this air in direction of the vessel 11.

The heater 13 is operable to heat the flow of air generated by the air flow driver 12. In the specific illustrated embodiment, the heater is an electrical resistance being positioned between the fan and the perforated plate 14 with the result that the flow of air is heated before it enters the vessel 11 to heat and to lift the beans.
The heater 13 is operable to apply a roasting profile to the beans, this roasting profile being defined as a curve of temperature against time.

### Control System of Roasting Apparatus

With reference to **Figures 2 and 3****,** the control system 180 will now be considered : the control system 180 is operable to control the components of the roasting unit to roast coffee beans in the system 10. The control system 180 typically comprises at a second level of roasting apparatus : a user interface 20, a processing unit 18, sensors 23, a power supply 21, a memory 19, optionally a communication interface 24 for remote connection.

The user interface 20 comprises hardware to enable a user to interface with the processing unit 1, by means of user interface signal. More particularly, the user interface receives commands from a user, the user interface signal transfers the said commands to the processing unit 18 as an input. The commands may, for example, be an instruction to execute a roasting process and/or to adjust an operational parameter of the roasting apparatus 1 and/or to power on or off the roasting apparatus 1. The processing unit 18 may also output feedback to the user interface 20 as part of the roasting process, e.g. to indicate the roasting process has been initiated or that a parameter associated with the process has been selected or to indicate the evolution of a parameter during the process or to create an alarm.
In a particular embodiment, the user interface can be used to provide identification of the coffee beans introduced inside the vessel by the user by manual input such as selection of an identification type in a list of pre-selected coffee beans or by entering a digital reference of the coffee, for example read from a coffee beans package.

The hardware of the user interface may comprise any suitable device(s), for example, the hardware comprises one or more of the following : buttons, such as a joystick button, knob or press button, joystick, LEDs, graphic or character LDCs, graphical screen with touch sensing and/or screen edge buttons. The user interface 20 can be formed as one unit or a plurality of discrete units.
A part of the user interface can also be on a mobile device (mobile app). In that case the input and output can be transmitted to the mobile device through the communication interface 24.

The sensors 23 are operable to provide an input signal to the processing unit 18 for monitoring of the roasting process and/or a status of the roasting apparatus. The input signal can be an analogue or digital signal. The sensors 23 typically comprise one or more of the following : temperature sensor 231, position sensor associated with the vessel and/or the chaff collector.
The measuring device 2 is operable to provide the input 22 that is the quantity of coffee beans introduced inside the vessel 11. This input 22 can be the weight of the beans measured by the scale or a volume of beans or a level measured by a level sensor associated with the vessel 11.
A code reader 3 can be provided and operable to read a code on coffee beans package and automatically provide an input 30 that is the identification of the coffee beans introduced in the measuring device 2 or in the vessel 11.

The processing unit 18 generally comprise memory, input and output system components arranged as an integrated circuit, typically as a microprocessor or a microcontroller. The processing unit 18 may comprises other suitable integrated circuits, such as : an ASIC, a programmable logic device such as a PAL, CPLD, FPGA, PSoC, a system on a chip (SoC), an analogue integrated circuit, such as a controller. For such devices, where appropriate, the aforementioned program code can be considered programed logic or to additionally comprise programmed logic. The processing unit 18 may also comprise one or more of the aforementioned integrated circuits. An example of the later is several integrated circuits is arranged in communication with each other in a modular fashion e.g. : a slave integrated circuit to control the user interface 20 in communication with a master integrated circuit to control the roasting unit 10.

The processing unit 18 generally comprises a memory unit 19 for storage of instructions as program code and optionally data. To this end the memory unit typically comprises : a nonvolatile memory e.g. EPROM, EEPROM or Flash for the storage of program code and operating parameters as instructions, volatile memory (RAM) for temporary data storage. The memory unit may comprise separate and/or integrated (e.g. on a die of the semiconductor) memory. For programmable logic devices the instructions can be stored as programmed logic.

The instructions stored on the memory unit 19 can be idealised as comprising a coffee beans roasting program. The coffee beans roasting program can be executed by the processing unit 18 in response to the said input, (the commands from the user interface 20, and/or the signal of the sensors 23 such as temperature, beans level, code reader). Execution of the coffee beans roasting program causes the processing unit 18 to control the following components : the heater 13 and the air flow driver 12. The coffee beans roasting program can effect control of the said components using extraction information encoded on the code and/or other information that may be stored as data on the memory unit 19 or from a remote source through the communication interface and/or input via the user interface 20 and/or signal of the sensors 23 .

The power supply 21 is operable to supply electrical energy to the said controlled components and the processing unit 18. The power supply 21 may comprise various means, such as a battery or a unit to receive and condition a main electrical supply. The power supply 21 may be operatively linked to part of the user interface 20 for powering on or off the roasting apparatus 1.

The communication interface 24 is for data communication of the roasting apparatus 1 with another device or system, which may be a server system, a mobile device and/or in particular the measuring apparatus. The communication interface 24 can be used to supply and/or receive information related to the coffee beans roasting process, such as roasting process information, nature of the beans, quantity of beans. The communication interface 24 may comprise a first and second communication interface for data communication with several devices at once or communication via different media.

The communication interface 24 can be configured for cabled media or wireless media or a combination thereof, e.g. : a wired connection, such as RS-232, USB, 12C, Ethernet define by IEEE 802.3, a wireless connection, such as wireless LAN (e.g. IEEE 802.11) or near field communication (NFC) or a cellular system such as GPRS or GSM. The communication interface 24 interfaces with the processing unit 18, by means of a communication interface signal. Generally the communication interface comprises a separate processing unit (examples of which are provided above) to control communication hardware (e.g an antenna) to interface with the master processing unit 18. However, less complex configurations can be used e.g. a simple wired connection for serial communication directly with the processing unit 18.

The processing unit 18 is operable to :
- receive an input, i.e. the commands from the user interface 20, the signal of the sensors 23, the input 20 of the measured quantity of beans introduced in the vessel 11, optionally the input 30 of the code reader,
- process the input according to program code (or programmed logic) stored on the memory unit 19 (or eventually imputed from an external source such as the communication interface 24),
- provide an output, which is a roasting process. More specifically the output comprises the operation of : the heater 13 and the airflow driver 12.

In the step of processing the input, the processing unit 18 is operable to determine the roasting recipe at least partly based on the input of the quantity of coffee beans present inside the vessel and based on the identified nature of the coffee beans too.

In one embodiment, the memory unit 19 comprises a database storing, for each nature of coffee beans, different roasting recipes adapted to the roasting of different pre-determined quantities of beans. Based on the input 20 of the measured quantity of coffee beans, the processing unit of the roasting apparatus is configured to select the roasting recipe corresponding to the roasting of a pre-determined quantity of beans presenting the smallest difference of quantity with the measured quantity.

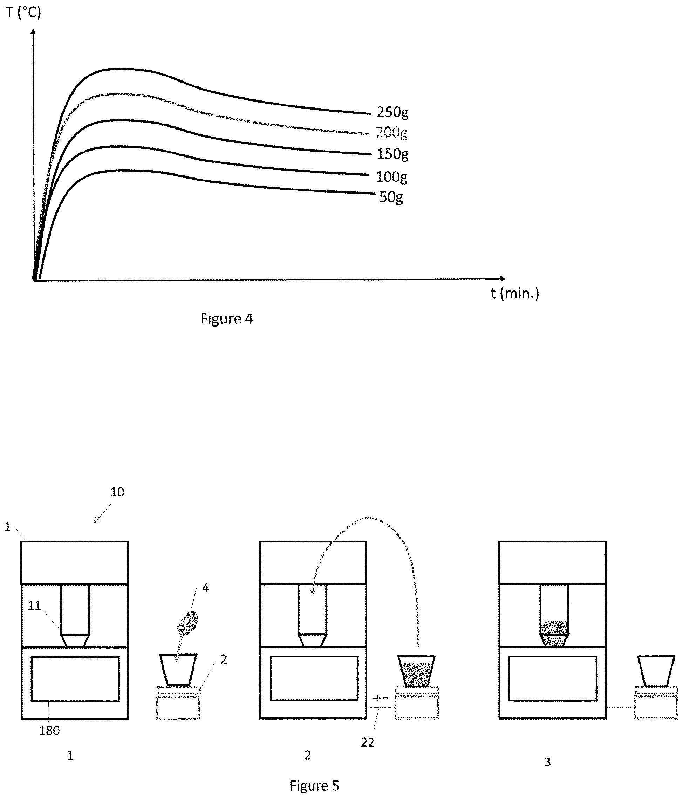

**Figure 4** illustrates an example of roasting recipes stored in the database of the memory unit 19 or a remote server for a particular nature N of coffee beans and for different discrete pre-determined weights, that are : 50 g, 100 g, 150 g, 200 g and 250 g. If the input 22 for measured quantity of beans input is 210 g, then the processing unit 18 is operable to select the roasting recipe corresponding to the pre-determined quantity of beans 200 g because the smallest difference between 210 and the five pre-determined quantities 50, 100, 150, 200, 250 is the difference between 210 and 200.
Consequently, the roasting profile of the curve defined for the pre-determined quantity of 200 g of coffee beans of nature N is applied to the quantity of 210 g of coffee beans of nature N. Usually, this database is built on experimental roasting processes of different quantities of beans of different natures.

If the quantity provided by the measuring device is a volume and not a weight, the weight can be deduced indirectly from an average density of coffee beans or more preferably, the identification of the nature of the beans provides access to the exact density of said beans enabling the calculation of the weight of beans introduced in the vessel.

Alternatively to storage in memory unit 19, the database can be stored in a remote server and the processing unit 18 can be supplied with access to this database through the communication interface 24, eventually through a mobile device too.

In the step of processing the output, the processing unit 18 operates the heater usually in a closed-loop control using the input signal from the temperature sensor 231 as feedback to apply the temperature versus time profile corresponding to the determined or selected roasting profile.

**Figure 5** illustrates a system 10 where the roasting apparatus 10 and the measuring apparatus 2 are physically separated. In this system, the coffee beans 4 are introduced and measured in an intermediate container 5 before being introduced inside the vessel 11 of the roasting apparatus 1.
This system is particularly useful when the vessel is not removable form the roaster, for example in case of drum roasters.
The measuring device 2 is connected through a cable (USB, Serial) to the roasting apparatus and is able to supply the control system of the roasting apparatus with the measured quantity of beans 22. Alternatively, the connection can be established through Wi-Fi or Bluetooth.

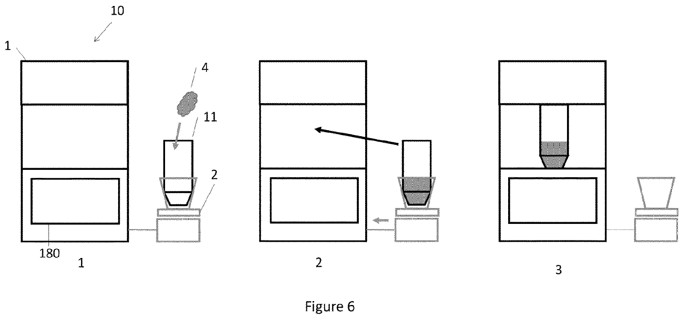

**Figure 6** provides an alternative embodiment of the system of Figure 5 where the vessel 11 is removable from the roasting apparatus and can be placed on the measuring apparatus 2 in filling and measuring position before being positioned back on the roasting apparatus in a roasting position. Preferably the measuring apparatus 2 comprises a receiving area configured for holding the vessel 11 of a roasting apparatus so that it is securely hold during filling and measuring. For example, the measuring device can present an interface matching with the bottom of the vessel. Preferably, the measuring device is configured to automatically provide the weight of beans without the tare weight of the vessel.

Although the invention has been described with reference to the above illustrated embodiments, it will be appreciated that the invention as claimed is not limited in any way by these illustrated embodiments.
Variations and modifications may be made without departing from the scope of the invention as defined in the claims. Furthermore, where known equivalents exist to specific features, such equivalents are incorporated as if specifically referred in this specification.
As used in this specification, the words "comprises", "comprising", and similar words, are not to be interpreted in an exclusive or exhaustive sense. In other words, they are intended to mean "including, but not limited to".

**List of references in the drawings :**

| | |
|---|---|
| roaster | 1 |
| roasting unit | 10 |
| vessel | 11 |
| levels | 111a, 111b |
| handle | 112 |
| fan | 12 |
| motor | 121 |
| heater | 13 |
| perforated plate | 14 |
| housing | 15 |
| chaff collector | 16 |
| cover | 17 |
| processing unit | 18 |
| control system | 180 |
| memory | 19 |
| measuring device | 2 |
| user interface | 20 |
| power supply | 21 |
| measured quantity input | 22 |
| sensor | 23 |
| temperature sensor | 231 |
| communication interface | 24 |
| code reader | 3 |
| identification input | 30 |
| coffee beans | 4 |
| container | 5 |

## Claims

1. A system (10) for roasting coffee beans comprising :
- a roasting apparatus (1), said apparatus comprising :
• a vessel (11) to contain coffee beans,
• a heater (12) to heat coffee beans contained in the vessel,
• a control system (180) operable to control the heater and configured to apply a roasting recipe comprising at least a temperature versus time profile,
and
- an apparatus (2) for measuring a quantity of coffee beans introduced inside the vessel, and wherein the control system (180) of the roasting apparatus is operable to obtain :
- the quantity of coffee beans introduced inside the vessel and measured by the measuring apparatus, and
- the identification of the nature of the coffee beans introduced inside the vessel, and
wherein the control system of the roasting apparatus is operable to determine the roasting recipe to be applied to the coffee beans at least partly based on the identification of the nature of said coffee beans and on the measured quantity of said coffee beans introduced inside the vessel.

2. A system according to any one the precedent claims, wherein the measuring apparatus is:
- a scale measuring weight of coffee beans, or
- a device comprising at least one cavity of predetermined volume, or
- a level sensor measuring a volume of coffee beans inside the vessel.

3. A system according to any one of Claim 1 or 2, wherein the measuring apparatus is a sub-part of the roasting apparatus.

4. A system according to any one of the precedent claims, wherein the measuring apparatus is configured to measure the quantity of beans introduced inside the vessel while the vessel is hold in the roasting position.

5. A system according to Claim 1 or 2, wherein the measuring apparatus is an apparatus physically separated from the roasting apparatus and said system comprises communication means configured to communicate the measured quantity of coffee beans from the measuring apparatus to the control system of the roasting apparatus.

6. A system according to any one of the precedent claims, wherein the vessel is hold inside the roasting apparatus in a roasting position and the vessel is removable from the roasting apparatus.

7. A system according to the precedent claim, wherein the measuring apparatus is configured to receive and hold the removable vessel in a measuring position, said measuring position being apart the roasting position.

8. A system according to any one the precedent claims, wherein said system comprises a database, said database storing, for each nature of coffee beans, different roasting recipes adapted to the roasting of different pre-determined quantities of beans, and
wherein, based on the identification of the nature of the coffee beans and on the measured quantity of coffee beans, the control system (180) of the roasting apparatus is configured to select the roasting recipe corresponding to the roasting of a pre-determined quantity of beans presenting the smallest difference of quantity with the measured quantity.

9. An apparatus for measuring a quantity of coffee beans, said measuring apparatus being configured :
- to measure a quantity of coffee beans, and
- to communicate said quantity as an input to the control system of a roasting apparatus,
wherein said apparatus comprises a receiving area configured for holding the vessel (11) of a roasting apparatus, said vessel being designed to contain coffee beans during a roasting operation.

10. A method for roasting coffee beans using the system of any one of Claims 1 to 8, the method comprising :
- measuring the quantity of the coffee beans introduced inside the vessel,
- identifying the nature of the coffee beans introduced inside the vessel,
- roasting the coffee beans inside the vessel by applying a roasting recipe, said roasting recipe being determined based on the measured quantity and the nature of the beans inside the vessel.

11. A computer program of a processing unit of a control system of an apparatus for roasting coffee beans part of the system described above, the computer program comprising program code and/or program logic which when executed on the processing unit effects the steps of:
- measuring the quantity of the coffee beans introduced inside the vessel,
- identifying the nature of the coffee beans introduced inside the vessel,
- roasting the coffee beans inside the vessel by applying a roasting recipe, said roasting recipe being determined based on the measured quantity and the nature of the beans inside the vessel.
